# NEW EUROPEAN PATENT SPECIFICATION

(11) **EP 1 855 416 B2**
(45) Date of publication and mention of the opposition decision: **13.11.2013**
(45) Mention of the grant of the patent: 30.06.2010
(21) Application number: 06742157.8
(22) Date of filing: 12.06.2006
(51) Int. Cl.: H04L 12/26

(54) **A METHOD FOR MEASURTING THE PERFORMANCE PARAMETERS OF THE MULTI-PROTOCOL LABEL SWITCHING NETWORK**
VERFAHREN ZUR MESSUNG DER LEISTUNGSPARAMETER DES MULTIPROTOCOL-LABEL-SWITCHING-NETZWERKS
PROCEDE DE MESURE DES PARAMETRES DE PERFORMANCE DU RESEAU A COMMUTATION MULTIPROTOCOLE PAR ETIQUETTE

(30) Priority: 13.06.2005 CN 200510076664; 17.11.2005 CN 200510114860
(43) Date of publication of application: 14.11.2007
(73) Proprietor: Huawei Technologies Co., Ltd., Longgang District, Shenzhen Guangdong 518129 (CN)
(72) Inventor: ZHAI, Suping, Huawei Administration Building, Shenzhen, Guangdong 518129 (CN)
(74) Representative: Körber, Martin Hans
(86) International application number: PCT/CN2006/001288
(87) International publication number: WO 2006/133635

(56) References cited:
- EP-A- 1 111 871
- EP-A- 1 347 621
- WO-A-03/094442
- WO-A1-02/078387
- CN-A- 1 551 571
- KR-A- 2003 089 604
- US-A1- 2005 073 961
- US-A1- 2005 123 003
- LUCA MARTINI NASSER EL-AAWAR CISCO SYSTEMS ET AL: "Encapsulation Methods for Transport of ATM Over MPLS Networks; draft-ietf-pwe3-atm-encap-07.txt;" IETF STANDARD-WORKING-DRAFT, INTERNET ENGINEERING TASK FORCE, IETF, CH, vol. pwe3, no. 7, October 2004 (2004-10), XP015025958 ISSN: 0000-0004
- HE Z. ET AL.: 'Architecture of IP QoS and Analysis of Performance' SCIENCE MOSAIC pages 12 - 16, XP008095059
- DATABASE NETWORK WORKING GROUP RFC 1982 01 August 1996 R. ELZ, R. BUSH: 'Serial Number Arithmetic'
- DATABASE NETWORK WORKING GROUP IETF 01 May 2005 K. KOMPELLA, G. SWALLOW: 'Detecting MPLS Data Plane failures'
- DATABASE INT.TELECOMM.UNION ITU-T Y.1415, 01 February 2005 'Ethernet-MPLS network interworking-User plane interworking'
- DATABASE INT. TELECOMM.UNION Y 1413, 01 March 2004 ITU-T: 'TDM-MPLS network interworking- User plane interworking'
- DATABASE NSITE BRUSSELS 02 March 2005 E. TYCHON: 'Evaluate Network Performance with Cisco IOS Service Assurance Agent'

## Description

### Field of the Invention

The present invention relates to the field of measuring performance parameter of communication network, and more particularly, to a method, a system and a device for measuring performance parameters of a MultiProtocol Label Switching (MPLS) network.

### Background of the Invention

In the practical application of the MPLS network, the measurement of performance parameters is important for obtaining the Quality of Service (QoS) of the MPLS network exactly, that is, the QoS of the MPLS network may be obtained exactly by measuring the performance parameters. Therefore, the Internet Engineering Task Force (IETF) put forwards demands for measuring the performance parameters of the MPLS network in the contribution "draft-letf-mpls-oam-requirements-05.txt", which mainly deals witch two demands as follows:
firstly, it is required to measure the transmission properties of Label Switching Path (LSP) of the MPLS network so as to check the conformity of the Service Level Agreement (SLA) of the MPLS network and the serving capability of the MPLS network;
secondly, the measurement of the performance parameters such as a frame loss parameter, a frame delay parameter and a frame delay jitter parameter of the MPLS network makes it better to implement MPLS network layout, improves the serving capability of the MPLS network, and enhances the performance of the MPLS network.

The International Telecommunication Union (ITU) defines the connectivity check, mismatch check and mis-merging check of the LSP of the MPLS network in recommendation ITU-T Y.1711, and the availability of the LSP is defined in detail. However, there is no solution available for measurement satisfying the two demands above, i.e. at present there is no method for measuring the performance parameters, such as the frame loss parameter, the frame delay parameter and the frame delay jitter parameter of the MPLS network.

Prior art document US2005/0073961, 07.04.2005, discloses how transmission delay, jitter and packet loss are calculated based on timestamp and sequence number information of a test packet.

### Summary of the Invention

An embodiment of the present invention provides a method for measuring performance parameters of a MultiProtocol Label Switching, MPLS, network, comprising:
sending, by a first party, a performance parameter measurement packet carrying information for measuring a performance parameter of the MPLS network to a second party; and
measuring, by the second party, a frame delay parameter, or a frame throughput parameter of the MPLS network according to the information received in the performance parameter measurement packet;
wherein the information for measuring the performance parameter of the MPLS network further comprises a sequence number for measuring a frame loss parameter and the process of measuring the frame loss parameter of the MPLS network comprises:
   - upon receiving performance parameter measurement packets sent by the first party successively, detecting whether the sequence number carried in the performance parameter measurement packet received is in conformity with an equation that: the next expected sequence number = (the sequence number carried in the performance parameter measurement packet received + 1) mod 2¹⁶; wherein the sequence number carried in each of the performance parameter measurement packets sent successively is increased by 1 successively in the order of sending the performance parameter measurement packets;
   - if the sequence number carried in the performance parameter measurement packet received meets the rule above, the frame loss parameter being 0;
   - otherwise, determining the frame loss parameter according to the difference between the sequence number carried in the performance parameter measurement packet received and the expected sequence number; and
wherein the measurement of the frame delay parameter, frame delay jitter parameter or frame throughput parameter is performed only after the packet validity is detected and no frame loss occurs.

Another embodiment of the present invention provides a system for measuring performance parameters of a MultiProtocol Label Switching, MPLS, network, comprising:
a first device for sending a performance parameter measurement packet carrying information for measuring a performance parameter of the MPLS network; and
a second device in accordance with claim 3 for measuring the performance parameter of the MPLS network according to the information in the performance parameter measurement packet.

Another embodiment of the present invention provides a device, comprising:
means for receiving from another device a performance parameter measurement packet carrying information for measuring a performance parameter of a MultiProtocol Label Switching, MPLS, network, and
means for measuring the performance parameter of the MPLS network according to the information, said performance parameter being a frame delay parameter, or a frame throughput parameter;
said device further comprising:
   means for detecting whether a sequence number carried in performance parameter measurement packets received is in conformity with an equation that: the next expected sequence number = (the sequence number carried in the performance parameter measurement packet received + 1) mod 2¹⁶; wherein the sequence number carried in each of the performance parameter measurement packets sent successively is increased by I successively in the order of sending the performance parameter measurement packets; and
   means for determining the frame loss parameter according to difference between a sequence number carried in a frame loss measurement packet received and an expected sequence number; wherein
   said means for measuring the performance parameter are adapted to measure the frame delay parameter, frame delay jitter parameter or frame throughput parameter only after the packet validity is detected and no frame loss occurs.

As can be seen from the above, a performance parameter measurement packet for measuring the performance parameters of the MPLS network is constructed, the packet carrying the information for measuring the performance parameters of the MPLS network, thus the performance parameters of the MPLS network may be measured.

### Brief Description of the Drawings

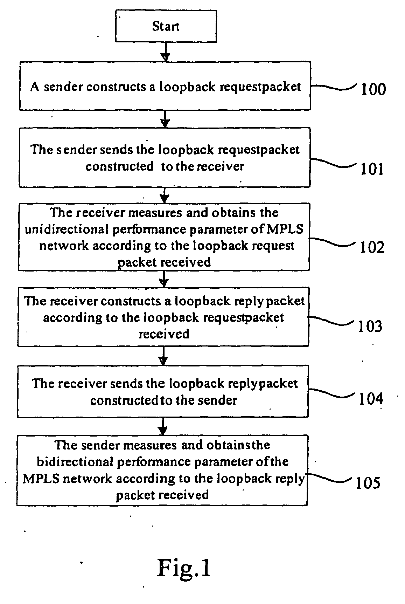

Figure 1 is a flowchart illustrating the method for measuring the performance parameters of the MPLS network in accordance with an embodiment of the present invention.

### Detailed Description of the Invention

To make the technical solution and merits of the present invention more apparent, embodiments of the present invention will be described in detail with reference to the accompanying drawings.

To measure the performance parameters of the MPLS network, a performance parameter measurement packet is set in accordance with an embodiment of the present invention. The performance parameter measurement packet may be a loopback request packet or a loopback reply packet. The structure of the loopback request packet is shown in Table 1 and the structure of the loopback reply packet is shown in Table 2.

**Table 1**

| Function type | Reserved | Sequence Number | LSP TTSI | Timestamp Sent | Timestamp Received | Padding | BIP 16 |
|---|---|---|---|---|---|---|---|
| 1 octets | 1 octets | 2 octets | 20 octets | 4 octets | 4 octets | 10 octets | 2 octets |

**Table 2**

| Function type | Sequence Number | LSP TTSI | Timestamp Sent | Timestamp Received | Padding | BIP 16 |
|---|---|---|---|---|---|---|
| 1 octets | 3 octets | 20 octets | 4 octets | 4 octets | 10 octets | 2 octets |

When measuring the performance parameters of the MPLS network, the sender constructs a loopback request packet shown in Table 1 and sends the loopback request packet to the receiver. When constructing the loopback request packet, it may include no Timestamp Received, and the Timestamp Sent may be the time-of-day of the clock of the sender, i.e. one hour selected from 1 to 24 hours is set as the Timestamp Sent. The Function type may be set as the type of the request packet, and the LSP TTSI (Trace Terminal Source Indicator) may be set as an identity of the sender. The BIP 16 may be set as the check value calculated using the algorithm set in advance, and the Padding may be set as the label of MPLS LSP, which makes the loopback request packet reach the receiver.

When measuring the performance parameters of the MPLS network, upon receiving the loopback request packet shown in Table 1 sent by the sender, the receiver may acquire the performance parameters of the MPLS network measured unidirectionally according to the information carried in the loopback request packet. Upon measuring and obtaining the performance parameters of the MPLS network of the sender, the receiver may also construct and send the loopback reply packet shown in Table 2 to the sender, which makes it possible for the sender to obtain the performance parameters of the MPLS network measured bi-directionally according to the information carried in the loopback reply packet. When constructing the loopback reply packet, it may include no Timestamp Sent, and the Timestamp Received may be set as the time-of-day of the clock of the receiver; the Function type may be set as the type of the reply packet, such as 0x06, and the LSP TTSI may be set as an identity of the receiver; the BIP 16 may be set as the check value calculated using the same algorithm preset in advance as that of the sender, and the Padding may be set as the label of the MPLS LSP, which makes the loopback reply reach the sender.

The packets shown in Table 1 or 2 are packets with Layer 2 frame encapsulation format, and the Layer 2 frame attribute may be constructed during the establishing or changing of the MPLS LSP between the sender and the receiver; the loopback request packet includes a source Media Access Control (MAC) address, Virtual Path Identifier (VPI)/Virtual Channel Identifier (VCI) and Data Link Connection Identifier (DLCI), and the loopback reply packet includes a destination MAC address, VCI and DLCI.

All of the processes for measuring the performance parameters of the MPLS network are performed when the MPLS network is in the available state. However, the MPLS network being in the available state does not mean that no frame will be lost when an MPLS LSP transmits packets. When the frame loss occurs in the MPLS network, i.e. that the frame loss occurs is determined according to the sequence number of the performance parameter measurement packet shown in Table 1 or 2, it is very likely that the MPLS network is still in the available state, because the MPLS LSP does not enter into the unavailable state until the MPLS LSP has been in the defect state for ten seconds without recovery according to the definition of the available state of the MPLS network in the ITU-T Y.1711; when the MPLS LSP recovers within ten seconds after entering into the defect state, it does not enter into the unavailable state, however, the frame loss may occur when packets are transmitted at this point. Therefore, in order to measure the frame delay parameter, the frame delay jitter parameter and the frame throughput parameter more exactly, a sequence number is set in the performance parameter measurement packet shown in Table 1 and 2 so that the sender can obtain the frame loss parameter of the receiver through measuring the sequence number set in the loopback reply packet and the receiver can obtain the frame loss parameter of the sender through measuring the loopback request packet. In this way, when the frame loss parameter of the MPLS LSP is not 0, the frame delay parameter, the frame delay jitter parameter and the frame throughput parameter will not be measured so as to avoid obtaining inaccurate performance parameters of the MPLS network.

Practically, the frame loss parameter may not be measured when the frame delay parameter, the frame delay jitter parameter or the frame throughput parameter is measured.

In accordance with an embodiment of the present invention, the process of setting and processing a sequence number is described below.

In Step 1, a sender, e.g. an Ingress Label Switching Router (Ingress LSR), sets sequence numbers respectively in loopback request packets sent successively to a receiver such an Egress LSR; the sequence number of a first loopback request packet sent to the receiver is set as 1, and a sequence number of a next loopback request packet is added by 1 based on the sequence number of a loopback request packet sent before the next loopback request packet.

In Step 2, a receiver may set the sequence number expected as 0 before receiving loopback request packets, i.e. before receiving the first loopback request packet sent by the sender; and detect, upon receiving the subsequent loopback request packets successively, whether the sequence numbers carried in the subsequent loopback request packets are subject to the rule as follows:
a next sequence number expected = (the sequence number carried in the loopback request packet received currently + 1) mod 2¹⁶, wherein mod represents a remainder and 2¹⁶ is the maximum value of the sequence number, i.e. the sequence numbers of loopback request packets orderly cycle within the range from 1 to 2¹⁶ according to the sending order.

If the loopback request packets received in turn by the receiver all meet the rule above, no frame is lost when transmitting packets, and the frame loss parameter is 0; otherwise, the frame loss occurs in the MPLS network, and the frame loss parameter is determined according to the loss number.

Similarly, the sender may also determine the frame loss parameter of the packets sent by the receiver. At this point, the receiver orderly sets the sequence numbers increasing by degrees from 1 in the loopback reply packet according to the order of sending the loopback reply packets to the sender; upon receiving the loopback reply packet, the sender determines the frame loss parameter of the packet sent by the receiver according to the rule described in Step 2.

According to an embodiment of the present invention, if the receiver and the sender do not support the detection of the sequence numbers, the sender may set the sequence numbers carried in all loopback request packets sent as 0 or the receiver may set the sequence numbers carried in all loopback reply packets sent as 0, which makes it possible to notify the other party that the local party does not support the detection of the sequence numbers.

Figure 1 is a flowchart illustrating the method for measuring performance parameters of the MPLS network in accordance with an embodiment of the present invention, the method is described below.

In Step 100, a sender constructs a loopback request packet.

The loopback request packet may be one or more.

The loopback request packet may be constructed using the packet structure shown in Table 1; it may also carry the sequence number for measuring whether the frame loss occurs.

In Step 101, the sender sends the loopback request packet to the receiver.

When multiple loopback request packets are constructed, the multiple loopback request packets may be sent to the receiver.

In Step 102, the receiver measures and obtains the unidirectional performance parameter of the MPLS network according to the loopback request packet received.

When there are multiple loopback request packets, the receiver receives the multiple loopback request packets in turn, measures and obtains the performance parameters of the MPLS network according to the multiple loopback request packets, thus more exact performance parameters of the MPLS network are obtained.

In Step 103, the receiver constructs a loopback reply packet according to the loopback request packet received.

When there are multiple loopback request packets, multiple loopback reply packets may be constructed correspondingly; when there is one loopback request packet, correspondingly, one loopback reply packet may be constructed.

The loopback reply packet may be constructed using the packet structure shown in Table 2; practically, it may also carry the sequence number for measuring whether the frame loss occurs.

In Step 104, the receiver sends the loopback reply packet constructed to the sender.

In Step 105, the sender measures and obtains the bidirectional performance parameter of the MPLS network according to the loopback reply packet received.

When there are multiple loopback reply packets, the sender receives the multiple loopback reply packets in turn, measures and obtains the bidirectional performance parameters of the MPLS network according to the multiple loopback reply packets, thus more exact performance parameters of the MPLS network are obtained.

The unidirectional performance parameter of the MPLS network may also be measured in accordance with an embodiment of the present invention, and Steps 103 to 105 may be omitted at this point.

The measurement for the unidirectional and the bidirectional performance parameter of the MPLS network is hereinafter described in detail.

It may be determined that no frame loss occurs before measuring the frame delay parameter and the frame delay jitter parameter, which makes the frame delay parameter and the frame delay jitter parameter measured more exactly. Practically, the frame delay parameter and the frame delay jitter parameter may be measured directly without determining whether the frame loss occurs.

The measurement for the unidirectional frame delay parameter is described below.

The sender sends the loopback request packet constructed according to Table 1 carrying the Timestamp Sent, the BIP 16 and the sequence number; upon receiving the loopback request packet, the receiver detects the validity according to the BIP 16 carried in the loopback request packet and detects whether the frame loss occurs according to the sequence number carried in the loopback request packet. If the loopback request packet passes the detection, the unidirectional frame delay parameter may be obtained according to the Timestamp Sent carried in the loopback request packet and the time when the receiver receives the loopback request packet. The time when the receiver receives the loopback request packet is set as RT and the Timestamp Sent carried in the loopback request packet is set as ST; the unidirectional frame delay parameter FD is calculated as: FD=RT-ST + t, where t represents the clock difference between the receiver and the sender.

According to the embodiment of the present invention, since more than one loopback request packet is sent and sent one by one, the receiver may calculate in turn a unidirectional frame delay parameter of each loopback request packet, and average the unidirectional frame delay parameters of all loopback request packets so as to obtain a final unidirectional frame delay parameter.

The measurement for the bidirectional frame delay parameter is described below.

The sender sends the loopback request packet constructed according to Table 1 carrying the Timestamp Sent, the BIP 16 and the sequence number; upon receiving the loopback request packet, the receiver sends to the sender the loopback reply packet constructed according to both Table 2 and the information carried in the loopback request packet while calculating the frame delay parameter according to the measurement for the unidirectional frame delay parameter, and the loopback reply packet carries the Timestamp Received, the BIP 16 and the sequence number. Upon receiving the loopback reply packet, the sender checks the packet validity according to the BIP 16 carried in the loopback reply packet and detects whether the frame loss occurs according to the sequence number carried in the loopback reply packet. If the loopback reply packet passes the detection, the bidirectional frame delay parameter may be obtained according to the Timestamp Received carried in the loopback reply packet and the time when the sender receives the loopback reply packet. The time when the sender receives the loopback reply packet is set as RT and the Timestamp Received carried in the loopback reply packet is set as ST; the bidirectional frame delay parameter FD is calculated as follows: FD=RT - ST + t, where t represents the clock difference between the receiver and the sender.

According to the embodiment of the present invention, since more than one loopback reply packet is sent one by one, the sender may calculate in turn a bidirectional frame delay parameter of each loopback reply packet, and average all the bidirectional frame delay parameters so as to obtain a final bidirectional frame delay parameter.

When measuring the bidirectional performance parameter of the MPLS network, if the processing time of checking the packet validity by the receiver can be acquired, the processing time of checking the packet validity by the receiver may be removed during the process of calculating the frame delay parameter so as to improve the precision for measuring the frame delay parameter.

The appropriate frame delay jitter parameter may be calculated using the frame delay parameter obtained through unidirectional or bidirectional measurement in accordance with the embodiments of the present invention.

When using the frame delay parameter obtained through the unidirectional measurement, the frame delay jitter parameter = FD2 - FD1, i.e. the difference between the frame delay parameters of two adjacent loopback request packets.

When using the frame delay parameter obtained through the bidirectional measurement, the frame delay jitter parameter = FD2 - FD1, i.e. the difference between the frame delay parameters of two adjacent loopback reply packets.

To improve the precision for measuring the frame delay jitter parameter, the method for averaging multiple measurement results of the frame delay jitter parameter may be adopted to measure the frame delay jitter parameter, and the average of the multiple measurement results is regarded as a final frame delay jitter parameter.

The process of measuring the frame loss parameter is described below.

The frame loss parameter refers to the difference between the number of the loopback request packets sent by the sender and the number of the loopback reply packets received by the sender within a period of time, e.g. 1 second.

The frame loss parameter=|FT2 -FT1|- |FR2-FR1| where |FT2 -FT1| represents the number of the loopback request packets sent by the sender within the period of time, e.g. 1 second, and |FR2-FR| represents the number of the loopback reply packets received by the sender within the period of time, e.g. 1 second.

The embodiments of the present invention are hereinafter described in detail with reference to the specific application examples. More particularly, the measurement for the frame loss parameter, the frame delay parameter, the frame delay jitter parameter and the frame throughput parameter is given in detail respectively.

To measure the frame loss parameter, the Frame Loss Measurement packet may be used as the performance parameter measurement packet in accordance with an embodiment of the present invention. The Frame Loss Measurement packet is transmitted in the MPLS network and includes a Frame Loss measurement Request (FL-Request) packet and a Frame Loss measurement Reply (FL-Reply) packet, the structure of which is shown in Table 3.

Different Function types are used to distinguish between the FL-Request packet and the FL-Reply packet in accordance with an embodiment of the present invention, and the Function types of the FL-Request packet and the FL-Reply packet should be determined based on the code of Y.1711.

**Table 3**

| Function type | Reserve | Sequence Number | LSP TTSI | IngressTx FrmCnt | EgressRx FrmCnt | Padding | BIP16 |
|---|---|---|---|---|---|---|---|
| 1 octets | 1 octets | 2 octets | 20 octets | 4 octets | 4 octets | 10 octets | 2 octets |

The process of measuring the frame loss parameter is hereinafter described in detail with reference to the packet structure shown in Table 3.

Frame counters are set respectively at the sender, such as an Ingress LSR, and the receiver, such as an Egress LSR, for counting the packets sent and the packets received respectively. When measuring the frame loss parameter, the measurement for the frame loss parameter is enabled respectively at the Ingress LSR and the Egress LSR. The Ingress LSR sends the FL-Request packet carrying a packet sending counter value (IngressTxFrmCnt) periodically, and a packet receiving counter value (EgressRxFrmCnt) is meaningless in the FL-Request packet; upon receiving the FL-Request packet, the Egress LSR constructs and sends an FL-Reply packet to the Ingress LSR, and the FL-Reply packet copies the IngressTxFrmCnt carried in the FL-Request and carries the EgressRxFrmCnt; upon receiving the FL-reply packet, the Ingress LSR calculates the frame loss parameter: |FT2-FT1|- |FR2-FR1|, where |FT2-FT1| represents the sum of the FL-Request packets sent by the Ingress LSR when measuring the frame loss parameter and |FR2-FR1| represents the sum of the FL-Reply packets received by the Egress LSR.

To measure the frame loss parameter, frame loss parameter measurement enabling identifiers should be set in the Ingress LSR and the Egress LSR at the same time. According to the frame loss parameter measurement enabling identifiers, whether to measure the frame loss parameter is determined.

Besides, the interval for sending FL-Request packets is set in the Ingress LSR, and the default value of the interval may be set as 100ms.

Values of other fields of the packet structure shown in Table 3 may be constructed based on the packet structure shown in Table 1 or 2.

To measure the frame delay parameter, a Frame Delay measurement Request (FD-Request) packet and a Frame Delay measurement Reply (FD-Reply) packet may be adopted as the performance parameter measurement packet in accordance with an embodiment of the present invention, the structure of which is shown in Table 4.

**Table 4**

| Function type | Reserve | Sequence Number | LSP TTSI | IngressTimeStamp Sent | Padding | BIP16 |
|---|---|---|---|---|---|---|
| 1 octets | 1 ctets | 2 octets | 20 octets | 4 octets | 10 octets | 2 octets |

Likewise, different Function types are used to distinguish between the FD-Request packet and the FD-Reply packet in accordance with an embodiment of the present invention, the Function types of such two packets are determined based on the code of Y.1711.

The Ingress Timestamp Sent of the packet shown in Table 4 is the time-of-day (with respect to the time of one day) relative to the clock of the sender; the Egress Timestamp Sent of the packet shown in Table 4 is the time-of-day (with respect to the time of one day) relative to the clock of the receiver.

When measuring the frame delay parameter, the measurement for the frame delay parameter is enabled respectively at the Ingress LSR and the Egress LSR. The Ingress LSR sends the FD-Request packet carrying the Ingress Timestamp Sent actively; upon receiving the FD-Request packet, the Egress LSR constructs a FD-Reply packet to reply to the Ingress LSR, and the FD-Reply packet copies the Ingress Timestamp Sent carried in the FD-Request packet.

To measure the frame delay parameter, frame delay parameter measurement enabling identifiers are set in the Ingress LSR and the Egress LSR in the same time, according to which whether to measure the frame delay parameter is determined. Besides, the interval for sending FD-Request packets is set in the Ingress LSR, and the default value of the interval may be set as 100ms.

Values of other fields of the packet structure shown in Table 4 may be constructed based on the packet structure shown in Table 1 or 2.

Likewise, there are two methods of measuring the frame delay parameter, the unidirectional frame delay measurement and the bidirectional frame delay measurement, which are described below respectively.

In the method of the unidirectional frame delay parameter measurement, the Ingress LSR sends the FD-Request packet carrying the Ingress Timestamp Sent; upon receiving the FD-Request packet, the Egress LSR checks the packet validity, for example, detects the sequence number; if the sequence number is not the sequence number expected, the FD-Request packet is omitted; if the FD-Request packet is determined to be valid, the time when receiving the FD-Request packet, i.e. the Egress Timestamp Received, and the Ingress Timestamp Sent carried in the FD-Request packet received are recorded to calculate the unidirectional frame delay parameter. The unidirectional frame delay parameter FD = RT-ST + t, where t represents the clock difference between the Ingress LSR and the Egress LSR.

In the method, reference clocks of the sender and the receiver are synchronous in the MPLS network, or the Egress LSR has known the clock difference between the sender and the receiver.

In the method of the bidirectional frame delay parameter measurement, the Ingress LSR sends the FD-Request packet carrying the Ingress Timestamp Sent; upon receiving the FD-Request packet, the Egress LSR constructs the FD-Reply packet. Upon receiving the FD-Reply packet, the Ingress LSR checks the packet validity, for example, detects the sequence number; if the sequence number is not the sequence number expected to be received, the FD-Reply packet is omitted; if the FD-Reply packet is determined to be valid, the time when receiving the FD-Reply packet, i.e. the Ingress Timestamp Received (RT), is recorded and compared with the Ingress Timestamp Sent (ST) carried in the FD-Reply packet received so as to acquire the bidirectional frame delay parameter FD = RT-ST. Since the bidirectional frame delay parameter includes the processing time of the receiver, the processing time may be removed during the process of measuring the frame delay parameter so as to guarantee the precision of measurement.

Therefor, to make the bidirectional frame delay parameter measurement more exact, two fields may be added in the FD-Request/FD-Reply packet, which is shown in Table 5.

**Table 5**

| Function type | Reserve | Sequence Number | LSP TTSI | Ingress TimeStamp Sent | EgressTimeStamp Received | Egress TimeStamp Sent | Padding | BIP 16 |
|---|---|---|---|---|---|---|---|---|
| 1 octets | 1 octets | 2 octets | 20 octets | 4 octets | 4 octets | 4 octets | 10 octets | 2 octets |

The information carried in the field of the Ingress Timestamp Sent represents the timestamp when the Ingress LSR sends the FD-Request packet; the information carried in the field of the Egress Timestamp Received represents the timestamp when the Egress LSR receives the FD-Request packet; the information carried in the field of the Egress Timestamp Sent represents the timestamp when the Egress LSR sends the FD-Reply packet.

If the Ingress Timestamp Received represents the time when the Ingress LSR receives the FD-Reply packet, and the equation for calculating the frame delay parameter at this point is as follows: FD = (Ingress Timestamp Received - Ingress Timestamp Sent) - (Egress Timestamp Sent - Egress Timestamp Received).

The frame delay parameter may be calculated more exactly with the two time fields added, without including the time for processing packets by the receiver.

The measurement for the frame delay jitter parameter

According to an embodiment of the present invention, the frame delay jitter parameter expected may be acquired by using two successive frame delay parameters.

When using the unidirectional frame delay parameter, the frame delay jitter parameter=FD2 - FD1, i.e. the difference between the frame delay parameters of two adjacent the FD-Request packets.

When using the bidirectional frame delay parameter, the frame delay jitter parameter=FD2 - FD1, i.e. the difference between the frame delay parameters of two adjacent the FD-Reply packets.

The method of averaging the multiple values of measurement may also be adopted to acquire the statistical average.

In the measurement of the frame throughput parameter, the throughput is related to the size of the frame transmitting a packet; the throughput may be measured using the Frame throughput Request (LB-Req) packet and the Frame throughput Reply (LB-Res) packet, which includes: filling the data with variant lengths in the Padding field, increasing the sending rate of the LB-Req packet gradually with respect to each packet with different lengths, and recording whether the frame loss occurs in the LB-Res. The sending rate of the LB-Req packet is recorded when the frame loss occurs apparently, which is the throughput.

The formats of the LB-Req and LB-Res packets for measuring the throughput are shown in Table 6.

**Table 6**

| Function type | Reserve | Sequence Number | LSP TTSI | Padding | 16 |
|---|---|---|---|---|---|
| 1 octets | 1 octets | 2 octets | 20 octets | At least 18 octets | BIP 2 octets |

Of course, the sequence number carried may be adopted to determine whether the frame loss occurs in the LB-Res packet; if the LB-Res packet carries the packet sending counter value and the packet receiving counter value, the formula of |FT2 - FT1|-|FR2-FR1| may also be adopted for the determining.

To sum up, the measurement of the performance parameters of the MPLS network is described in detail in accordance with the embodiments of the present invention, and particularly includes the measurement of the frame delay parameter, the frame delay jitter parameter, the frame throughput parameter and the frame loss parameter, which provides an important reference for planning an MPLS network and provides the basis for detecting the conformity of Service Level Agreement (SLA) in the existing MPLS network.

The technical solutions and advantages of the present invention have been further described in detail by the above embodiments. The performance parameter measurement packet is transmitted on an LSP of the MPLS network, which enables one end of the LSP to measure the performance parameters of the MPLS network according to the information in the performance parameter measurement packet sent by the other end of the LSP. The performance parameters of the MPLS network measured may include the frame delay parameter, the frame delay jitter parameter or the frame throughput parameter. Therefore, the performance parameters of the MPLS network may be measured according to the method in accordance with the embodiments of the present invention.

It should be appreciated that the foregoing are only embodiments of the present invention and are not for use in limiting the present invention. Any modification, equivalent substitution, and improvement within the principle of the present invention should be covered in the protection scope thereof, as defined by the appended claims.

## Claims

1. A method for measuring performance parameters of a MultiProtocol Label Switching, MPLS, network, comprising:
sending, by a first party, a performance parameter measurement packet carrying information for measuring a performance parameter of the MPLS network to a second party; and
measuring, by the second party, a frame delay parameter or a frame throughput parameter of the MPLS network according to the information received in the performance parameter measurement packet;
wherein the information for measuring the performance parameter of the MPLS network further comprises a sequence number for measuring a frame loss parameter **characterized by**:
the process of measuring the frame loss parameter of the MPLS network comprises:
• upon receiving performance parameter measurement packets sent by the first party successively, detecting whether the sequence number carried in the performance parameter measurement packet received is in conformity with an equation that: the next expected sequence number = (the sequence number carried in the performance parameter measurement packet received + 1) mod 2¹⁶; wherein the sequence number carried in each of the performance parameter measurement packets sent successively is increased by 1 successively in the order of sending the performance parameter measurement packets;
• if the sequence number carried in the performance parameter measurement packet received meets the rule above, the frame loss parameter being 0;
• otherwise, determining the frame loss parameter according to the difference between the sequence number carried in the performance parameter measurement packet received and the expected sequence number; and
wherein the measurement of the frame delay parameter or frame throughput parameter is performed only after the packet validity is detected and no frame loss occurs.

2. The method of Claim 1, further comprising:
setting, by the first party, an initial value for the sequence number carried in the first performance parameter measurement packet sent to the second party, said initial value being 1; and
setting, by the second party before receiving the first performance parameter measurement packet, an initial value for sequence number of the current request of the performance parameter measurement; wherein the initial value set by the second party being 0.

3. A device, comprising:
means for receiving from another device a performance parameter measurement packet carrying information for measuring a performance parameter of a MultiProtocol Label Switching, MPLS, network, and
means for measuring the performance parameter of the MPLS network according to the information, said performance parameter being a frame delay parameter or a frame throughput parameter;
said device **characterized by**:
means for detecting whether a sequence number carried in performance parameter measurement packets received is in conformity with an equation that: the next expected sequence number = (the sequence number carried in the performance parameter measurement packet received + 1) mod 2¹⁶; wherein the sequence number carried in each of the performance parameter measurement packets sent successively is increased by 1 successively in the order of sending the performance parameter measurement packets; and
means for determining a frame loss parameter according to difference between a sequence number carried in a frame loss measurement packet received and an expected sequence number; wherein
said means for measuring the performance parameter are adapted to measure the frame delay parameter or frame throughput parameter only after the packet validity is detected and no frame loss occurs.

4. A system for measuring performance parameters of a MultiProtocol Label Switching, MPLS, network, comprising:
a first device for sending a performance parameter measurement packet carrying information for measuring a performance parameter of the MPLS network; and
a second device in accordance with claim 3 for measuring the performance parameter of the MPLS network according to the information in the performance parameter measurement packet.

## Patentansprüche

1. Verfahren zum Messen von Leistungsparametern eines Netzwerks mit MultiProtocol Label Switching, MPLS, mit den folgenden Schritten:
Senden eines Leistungsparameter-Messpakets durch einen ersten Teilnehmer, das Informationen zur Messung eines Leistungsparameters des MPLS-Netzwerks führt, zu einem zweiten Teilnehmer; und
Messen eines Rahmenverzögerungsparameters oder eines Rahmendurchsatzparameters des MPLS-Netzwerks durch den zweiten Teilnehmer gemäß den in dem Leistungsparameter-Messpaket empfangenen Informationen;
wobei die Informationen zur Messung des Leistungsparameters des MPLS-Netzwerks ferner eine Sequenznummer zur Messung eines Rahmenverlustparameters umfassen, **dadurch gekennzeichnet, dass**
der Prozess der Messung des Rahmenverlustparameters des MPLS-Netzwerks Folgendes umfasst:
• nach dem Empfang von durch den ersten Teilnehmer sukzessive gesendeten Leistungsparameter-Messpaketen Detektieren, ob die in dem empfangenen Leistungsparameter-Messpaket geführte Sequenznummer einer folgenden Gleichung genügt: die nächste erwartete Sequenznummer = (in dem empfangenen Leistungsparameter-Messpaket geführte Sequenznummer + 1) mod 2¹⁶; wobei die in jedem der sukzessive gesendeten Leistungsparameter-Messpakete geführte Sequenznummer sukzessive in der Reihenfolge des Sendens der Leistungsparameter-Messpakete um 1 vergrößert wird;
• wenn die in dem empfangenen Leistungsparameter-Messpaket geführte Sequenznummer die obige Regel erfüllt, ist der Rahmenverlustparameter 0;
• andernfalls Bestimmen des Rahmenverlustparameters gemäß der Differenz zwischen der in dem empfangenen Leistungsparameter-Messpaket geführten Sequenznummer und der erwarteten Sequenznummer; und
wobei die Messung des Rahmenverzögerungsparameters oder des Rahmendurchsatzparameters erst durchgeführt wird, nachdem die Paketvalidität detektiert ist und kein Rahmenverlust auftritt.

2. Verfahren nach Anspruch 1, ferner mit den folgenden Schritten:
Setzen eines Anfangswerts für die in dem ersten zu dem zweiten Teilnehmer gesendeten Leistungsparameter-Messpaket geführte Sequenznummer durch den ersten Teilnehmer, wobei der Anfangswert 1 ist; und
Setzen eines Anfangswerts für die Sequenznummer der aktuellen Anforderung der Leistungsparametermessung durch den zweiten Teilnehmer vor dem Empfang des ersten Leistungsparameter-Messpakets; wobei der durch den zweiten Teilnehmer gesetzte Anfangswert 0 ist.

3. Einrichtung, umfassend:
Mittel zum Empfangen eines Leistungsparameter-Messpakets von einer anderen Einrichtung, das Informationen zur Messung eines Leistungsparameters eines Netzwerks mit MultiProtocol Label Switching, MPLS, führt, und
Mittel zum Messen des Leistungsparameters des MPLS-Netzwerks gemäß den Informationen, wobei der Leistungsparameter ein Rahmenverzögerungsparameter oder ein Rahmendurchsatzparameter ist;
wobei die Einrichtung durch Folgendes gekennzeichnet ist:
Mittel zum Detektieren, ob eine in empfangenen Leistungsparameter-Messpaketen geführte Sequenznummer einer folgenden Gleichung genügt: die nächste erwartete Sequenznummer = (in dem empfangenen Leistungsparameter-Messpaket geführte Sequenznummer + 1) mod 2¹⁶; wobei die in jedem der sukzessive gesendeten Leistungsparameter-Messpakete geführte Sequenznummer sukzessive in der Reihenfolge des Sendens der Leistungsparameter-Messpakete um 1 vergrößert wird;
und
Mittel zum Bestimmen eines Rahmenverlustparameters gemäß der Differenz zwischen einer in einem empfangenen Rahmenverlust-Messpaket geführten Sequenznummer und einer erwarteten Sequenznummer; wobei
die Mittel zum Messen des Leistungsparameters dafür ausgelegt sind, den Rahmenverzögerungsparameter oder Rahmendurchsatzparameter erst zu messen, nachdem die Paketvalidität detektiert ist und kein Rahmenverlust auftritt.

4. System zum Messen von Leistungsparametern eines Netzwerks mit MultiProtocol Label Switching, MPLS, umfassend:
eine erste Einrichtung zum Senden eines Leistungsparameter-Messpakets, das Informationen zur Messung eines Leistungsparameters des MPLS-Netzwerks führt; und
eine zweite Einrichtung nach Anspruch 3 zum Messen des Leistungsparameters des MPLS-Netzwerks gemäß den Informationen in dem Leistungsparameter-Messpaket.

## Revendications

1. Procédé de mesure des paramètres de performance d'un réseau à commutation multiprotocole par étiquettes, MPLS, comprenant les opérations consistant à :
faire envoyer, par un premier correspondant à un deuxième correspondant, un paquet de mesure des paramètres de performance portant des informations destinées à mesurer un paramètre de performance du réseau MPLS ; et
mesurer, au niveau du deuxième correspondant, un paramètre de délai de trame ou un paramètre de débit utile de trame du réseau MPLS sur la base des informations reçues dans le paquet de mesure des paramètres de performance ;
les informations destinées à mesurer le paramètre de performance du réseau MPLS comprenant en outre un numéro de séquence pour mesurer un paramètre de perte de trames, **caractérisé par le fait que** le processus de mesure du paramètre de perte de trames du réseau MPLS comprend les opérations consistant à :
* lors de la réception des paquets de mesure des paramètres de performance envoyés successivement par le premier correspondant, détecter si le numéro de séquence acheminé dans le paquet de mesure des paramètres de performance ayant été reçu est en conformité, ou non, avec une équation suivant laquelle : le prochain numéro de séquence escompté = (le numéro de séquence acheminé dans le paquet de mesure des paramètres de performance ayant été reçu + 1) mod 2¹⁶ ; le numéro de séquence acheminé dans chacun des paquets de mesure des paramètres de performance envoyés successivement étant accru de 1 successivement dans l'ordre d'expédition des paquets de mesure des paramètres de performance ;
* si le numéro de séquence acheminé dans le paquet de mesure des paramètres de performance ayant été reçu satisfait à la règle précitée, le paramètre de perte de trames est égal à 0 ;
* dans le cas contraire, déterminer le paramètre de perte de trames sur la base de la différence entre le numéro de séquence acheminé dans le paquet de mesure des paramètres de performance ayant été reçu et le numéro de séquence escompté ; et
la mesure du paramètre de délai de trame ou du paramètre de débit utile de trame étant effectuée uniquement après que la validité du paquet est détectée et qu'aucune perte de trames ne s'est produite.

2. Procédé selon la revendication 1, comprenant en outre les opérations consistant à :
faire définir, par le premier correspondant, une valeur initiale pour le numéro de séquence acheminé dans le premier paquet de mesure des paramètres de performance qui a été envoyé au deuxième correspondant, ladite valeur initiale étant égale à 1 ; et
faire définir, par le deuxième correspondant, avant la réception du premier paquet de mesure des paramètres de performance, une valeur initiale pour le numéro de séquence de la requête actuelle de la mesure des paramètres de performance, la valeur initiale définie par le deuxième correspondant étant égale à 0.

3. Dispositif comprenant :
des moyens servant à recevoir d'un autre dispositif un paquet de mesure des paramètres de performance portant des informations pour mesurer un paramètre de performance d'un réseau à commutation multiprotocole par étiquettes, MPLS, et
des moyens servant à mesurer le paramètre de performance du réseau MPLS sur la base de ces informations, ledit paramètre de performance étant un paramètre de délai de trame ou un paramètre de débit utile de trame ;
ledit dispositif étant **caractérisé par** :
des moyens permettant de détecter si un numéro de séquence acheminé dans les paquets de mesure des paramètres de performance ayant été reçus est en conformité, ou non, avec une équation suivant laquelle : le prochain numéro de séquence escompté = (le numéro de séquence acheminé dans le paquet de mesure des paramètres de performance ayant été reçu + 1) mod 2¹⁶; le numéro de séquence acheminé dans chacun des paquets de mesure des paramètres de performance envoyés successivement étant accru de 1 successivement dans l'ordre d'expédition des paquets de mesure des paramètres de performance ; et
des moyens permettant de déterminer un paramètre de perte de trames sur la base de la différence entre un numéro de séquence acheminé dans un paquet de mesure de perte de trames ayant été reçu et un numéro de séquence escompté ;
lesdits moyens de mesure du paramètre de performance étant conçus pour mesurer le paramètre de délai de trame ou le paramètre de débit utile de trame uniquement après que la validité du paquet est détectée et qu'aucune perte de trames ne s'est produite.

4. Système de mesure des paramètres de performance d'un réseau à commutation multiprotocole par étiquettes, MPLS, comprenant :
un premier dispositif pour envoyer un paquet de mesure des paramètres de performance portant des informations pour mesurer un paramètre de performance du réseau MPLS ; et
un deuxième dispositif selon la revendication 3, pour mesurer le paramètre de performance du réseau MPLS sur la base des informations se trouvant dans le paquet de mesure des paramètres de performance.
